# EUROPÄISCHE PATENTSCHRIFT

(11) **EP 1 988 151 B1**
(45) Veröffentlichungstag und Bekanntmachung des Hinweises auf die Patenterteilung: **25.07.2012**
(21) Anmeldenummer: 07008788.7
(22) Anmeldetag: 30.04.2007
(51) Int. Cl.: C12C 7/17, C12C 7/14, C12F 3/06

(54) **Treberbunker**
Container for spent grain
Récipient de drèche

(43) Veröffentlichungstag der Anmeldung: 05.11.2008
(73) Patentinhaber: Krones AG, 93073 Neutraubling (DE)
(72) Erfinder: Stippler, Kurt Dr, 85417 Marzling (DE); Wasmuth, Klaus, 91792 Ellingen (DE); Stumpe, Cornelia, 93047 Regensburg (DE); Humele, Heinz, 93107 Thalmassing (DE)
(74) Vertreter: Grünecker, Kinkeldey, Stockmair & Schwanhäusser

(56) Entgegenhaltungen:
- EP-A- 0 673 997
- EP-A- 1 384 773
- WO-A-2005/040329
- DE-A1- 1 804 343
- DE-A1- 2 019 167
- DE-A1- 2 257 646
- DE-A1- 3 903 720
- DE-B- 1 197 421
- DE-C1- 19 541 225

## Beschreibung

Die Erfindung betrifft einen Treberbunker, sowie ein Läuterverfahren zum Erzeugen von Würze gemäß den Oberbegriffen der Ansprüche 1 und 9.

Aus der Druckschrift WO 2005/040329 A1 ist ein Läuterbottich mit bewegbarem Senkboden bekannt. Aus der Druckschrift DE 39 03 720 A1 ist eine Anlage zum kontinuierlichen Trennen einer flüssigen und einer festen Phase sowie zum Auslaugen der festen Phase bekannt, zum Beispiel des Biertrebers. Auch aus der DE-OS 11 07 421 ist eine Vorrichtung zur kontinuierlichen Gewinnung von Bierwürze aus Braumaische bekannt.

Nach dem Schroten des Malzes ist das Maischen der zweite Prozessabschnitt der Würzeherstellung im Sudhaus. Am Ende des Maischens besteht die Maische aus einem wässrigen Gemisch von gelösten und ungelösten Stoffen. Die wässrige Lösung, die die Extraktstoffe beinhaltet nennt man Würze, die ungelösten Teile nennt man Treber. Für die Bierherstellung wird nur die Würze verwendet, die zu diesem Zwecke möglichst vollständig von den Trebern getrennt werden muss. Dieser Trennvorgang heißt Abläutern. Das Abläutern ist ein Filtrationsvorgang, bei dem die Treber die Rolle des Filtermaterials übernehmen. In bekannter Weise erfolgt das Abläutern über einen Läuterbottich und erfolgt in zwei Phasen, nämlich dem Ablaufen der Vorderwürze und dem Auswaschen der Treber (Nachgüsse) mit dem Anschwänzwasser. Nach dem Abläutern wird die Würze dann zur Weiterbearbeitung der Würzepfanne oder einem entsprechenden Vorlaufgefäß zugeleitet. Ein solcher Läuterbottich bzw. ein solches Läuterverfahren sind allgemein bekannt und beispielsweise in " Technologie Brauer und Mälzer", Kunze, 8. Auflage 1989, VLB Berlin, S.243 - 271 näher erläutert. Die in dieser Anmeldung verwendeten Fachausdrücke sind dort näher beschrieben.

Der Treber, der im Läuterbottich abgetrennt wird, muss schließlich aus dem Läuterbottich ausgetrebert und entsorgt werden. Um eine höhere Produktivität zu gewährleisten ist es wünschenswert die Abläuterzeit zu verkürzen.

Hiervon ausgehend liegt der vorliegenden Erfindung die Aufgabe zugrunde, ein Verfahren und eine Vorrichtung bereitzustellen, die es ermöglichen die Abläuterzeit zu verkürzen mit dem Ergebnis, dass man höhere Sudfolgen erreichen kann.

Erfindungsgemäß wird diese Aufgabe durch die kennzeichnenden Merkmale der Ansprüche 1 und 9 sowie durch einen Läuterbottich nach Anspruch 14 gelöst.

Gemäß der vorliegenden Erfindung ist ein Treberbunker zur Aufnahme von Treber aus einem Läuterbottich derart ausgebildet, dass im unteren Bereich des Gehäuses zumindest ein Teil des Gehäuses als Siebfläche ausgebildet ist. Somit kann der Treber im Treberbunker, der noch nicht vollständig entwässert ist ,weiter entwässert werden. Dies hat den Vorteil, dass der Treber noch besser getrocknet werden kann, ohne dabei die Läuterzeit im Läuterbottich zu verlängern. Dadurch, dass im unteren Bereich zumindest ein Teil des Gehäuses als Siebfläche ausgebildet ist, kann durch die Siebfläche die Restflüssigkeit mit mehr oder weniger Restextrakt, d. h. die letzte Nachgußmenge bzw. Glattwasser abgepumpt und abgeleitet werden. Da die Siebfläche im unteren Teil des Gehäuses angeordnet ist wird das Abpumpen begünstigt, da durch die Schwerkraft die Restflüssigkeit im Treber nach unten läuft. Die Siebfläche kann beispielsweise als Lochblech, als geschlitztes bzw. gefrästes Senkbodenblech oder eine Drahthordenanordnung realisiert werden. Die Siebweite der Siebfläche entspricht dabei im Wesentlichen der Siebweite wie sie im Spalt- bzw. Senkboden des Läuterbottichs verwendet wird. Als unterer Bereich wird hier ein Bereich verstanden, der in der unteren Hälfte des Treberbunkers liegt. Dass die Siebfläche im unteren Bereich ausgebildet ist bedeutet zumindest im unteren Bereich.

Es ist besonders vorteilhaft, wenn das Gehäuse zumindest im unteren Bereich im Wesentlichen trichterförmig ausgebildet ist. Somit kann der Treber einfach aus dem Treberbunker durch die Fördereinrichtung ausgetragen werden.

Gemäß einer bevorzugten Ausführungsform ist zumindest ein Teil der Seitenwandungen des Gehäuses und/oder zumindest als ein Teil der Stirn- und Rückwandung als Siebfläche ausgebildet. Auch der Boden des Gehäuses kann entweder mehrere Öffnungen aufweisen, durch die nach unten sickernde. Restflüssigkeit ablaufen oder abgepumpt werden kann. Der Boden kann ebenfalls wie die Seitenwandungen zumindest teilweise als Siebfläche ausgebildet sein, um auch vom Boden aus den Treber effizient zu entwässern.

Vorteilhafterweise ist außen an der Siebfläche eine Wanne angeordnet, über die die Restflüssigkeit aus dem Treber abziehbar ist. Die Wanne kann dann in eine Ableitung münden, über die mittels einer Pumpe die Restflüssigkeit abgepumpt wird. Wenn in dem Gehäuse mehrere Siebflächen angeordnet sind, können entsprechende Wannen oder eine gemeinsame Wanne vorgesehen sein, die dann in eine Ableitung für das Treberwasser münden.

Vorteilhafterweise ist die Fördereinrichtung drehzahlgeregelt. Dies bringt den Vorteil mit sich, dass sie beim Entwässern nicht arbeitet oder nur mit einer geringen Leistung angetrieben wird, d.h. im Falle einer Förderschnecke nur mit einer geringen Drehzahl läuft, so dass der Treber durch die Fördereinrichtung aufgelockert wird. Zum Abtransport kann die Förderleistung erhöht werden, wobei z.B. im Falle einer Förderschnecke die Drehzahl erhöht wird damit ein rascher Abtransport möglich ist. Durch Wechseln der Drehrichtung kann eine Auflockerung erzielt werden, ohne dass der Treber aus dem Bunker gefördert wird. Zur besseren Auflockerung kann über der Fördereinrichtung noch eine Auflockerungseinrichtung vorgesehen sein, die den Treber auflockert.

Bei einem Verfahren gemäß der vorliegenden Erfindung wird bereits gegen Ende des Nachgusses oder beim Glattwasserziehen aus dem Läuterbottich in einen Treberbunker ausgetrebert, wobei im Treberbunker dem Treber über eine Siebfläche Restflüssigkeit entzogen wird. Das bedeutet, dass nach dem Ende des Anschwänzens, d.h. nach Ende des Aufbringens der gesamten Anschwänzwassermenge beim Ablaufen des letzten Nachgusses die Treberluken geöffnet werden und der Treber in einem noch deutlich feuchteren Zustand als bisher in den Treberbunker ausgetragen wird. Es ist auch möglich beim Glattwasserziehen, (d.h. wenn aus dem Läuterbottich Restflüssigkeit abgezogen wird, das einen niedrigen Extraktgehalt aufweist und nicht in die Würzepfanne geleitet wird, sondern beispielsweise in einen Glattwassertank) bereits die Treberluken geöffnet werden und der Treber in den Treberbunker ausgetrebert wird. Dadurch dass das Ablaufen des letzten Nachgusses oder das Glattwasserziehen parallel zum Austrebern erfolgt, bzw. sich zumindest zeitlich überschneidet, kann deutlich die Abläuterzeit verkürzt werden, so dass man höhere Sudfolgen erreichen kann. Darüber hinaus ist es möglich, obwohl der Treber in einem noch deutlich feuchten Zustand ausgetragen wird, den Treber noch besser zu trocknen als bisher. Durch das Entwässern des Trebers im Treberbunker kann die Zeitdauer für das Ablaufen des letzten Nachgusses oder die Zeitdauer für das Glattwasserziehen im Läuterbottich deutlich reduziert werden.

Die im Treberbunker entzogene Restflüssigkeit kann einem Tank, insbesondere einem Glattwassertank zugeführt werden und dann beispielsweise zum Anschwänzen oder als Einmaischwasser für den nächsten Sud verwendet werden. Wenn der Treber bereits beim Ablaufen des letzten Nachgusses in den Treberbunker geleitet wird und dort entwässert wird, so dass das abgezogene Restwasser noch sehr extraktreich ist, kann dieses auch einem Vorlaufgefäß oder einer nachfolgend angeordneten Würzepfanne zugeführt werden. Der entwässerte verdichtete Treber wird dann über eine Fördereinrichtung aus dem Treberbunker zum Beispiel in einen Trebersilo geleitet.

Vorteilhafterweise wird der Treber während ihm die Restflüssigkeit entzogen wird mechanisch aufgelockert. Dies kann in besonders vorteilhafter Weise über die Fördereinrichtung, beispielsweise eine Förderschnecke erfolgen, die dann mit niedriger Drehzahl und/oder in wechselnder Richtung angetrieben wird, oder aber über eine gesonderte Auflockerungseinrichtung.

Die vorliegende Erfindung wird nachfolgend unter Bezugnahme der folgenden Figuren näher erläutert.
- Fig. 1: zeigt grob schematisch in perspektivischer Darstellung eine mögliche Ausführungsform eines Treberbunkers gemäß der vorliegenden Erfindung.
- Fig. 2: zeigt einen Querschnitt durch eine andere mögliche Ausführungsform eines Treberbunkers gemäß der vorliegenden Erfindung.
- Fig. 3: zeigt einen Läuterbottich zusammen mit dem erfindungsgemäßen Treberbunker.
- Fig. 4: zeigt grob schematisch den erfindungsgemäßen Treberbunker zusammen mit dem Läuterbottich, sowie dem Maischebottich und der Würzepfanne.
- Fig. 5: zeigt eine erste mögliche Ausführungsform des erfindungsgemäßen Verfahrens.
- Fig. 6: zeigt eine zweite mögliche Ausführungsform des erfindungsgemäßen Verfahrens.
- Fig. 7: zeigt in schematischer Ansicht eine Fördereinrichtung sowie eine Auflockerungseinrichtung.
- Fig. 8: zeigt schematisch einen Extraktgehalt in Abhängigkeit der Zeit.

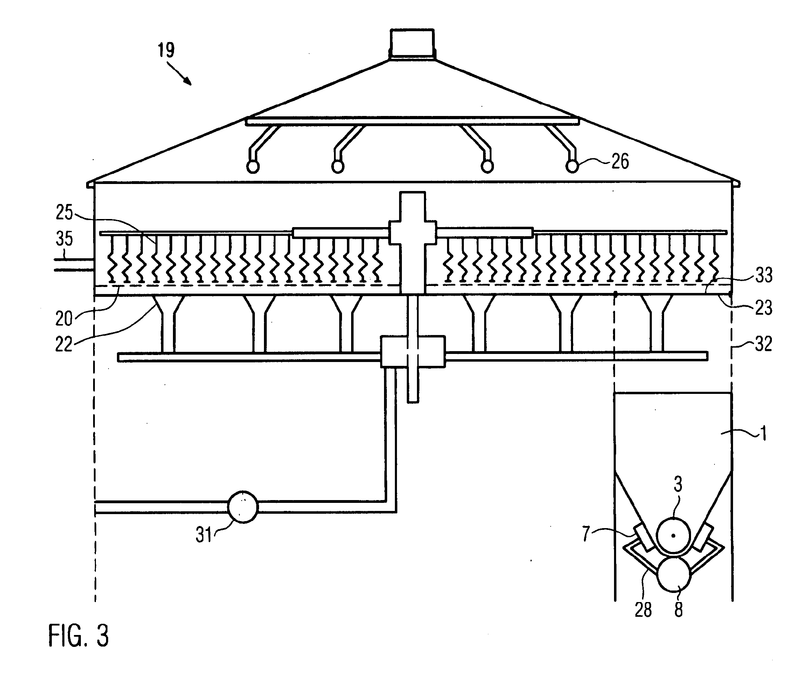

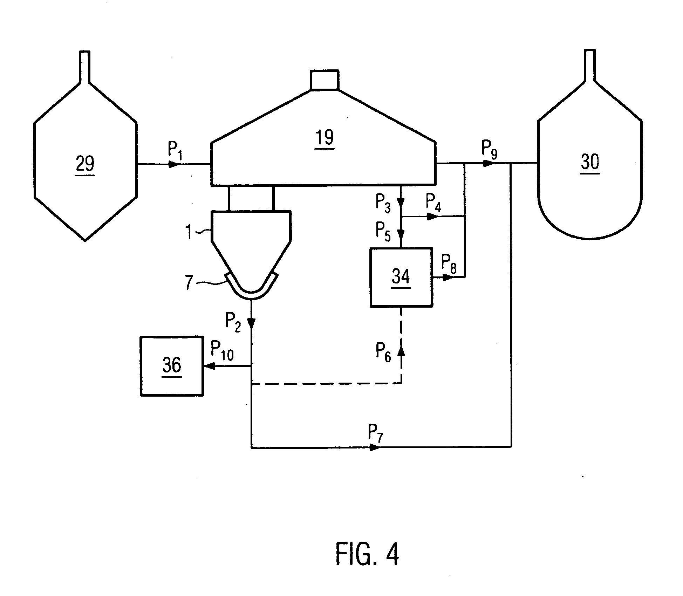

Fig. 3 zeigt grob schematisch einen Läuterbottich. Fig. 3 ist nur ein Beispiel für einen möglichen Läuterbottich. Der Läuterbottich 19 besteht aus einem zylindrischen Gefäß, das einen Bottichboden 23 aufweist und einen Senkboden bzw. Spaltsiebboden 20 z.B. mit Spaltbreiten in einem Bereich von 0,7 bis ca. 1,5 mm und einer freien Durchgangsfläche bis zu 20 %. Der Boden kann auch einen geschlitzten Boden mit Schlitzen von beispielsweise 0,7mm mal 80mm und einer freien Durchgangsfläche von bis zu 20 % aufweisen. Mit 35 ist eine Maischezuführung bezeichnet. In bekannter Weise weist der Läuterbottich weiter Hackmesser 25 auf, sowie Vorrichtungen wie z.B. Düsen 26 zum Zuführen des Anschwänzwassers. Der Treber bleibt auf dem Senkboden 20 liegen wobei die Würze durch den Senkboden abläuft und durch die Läutertulpen 22 über eine Läuterpumpe 31 abgezogen wird, und in bekannter Weise einem Vorlaufgefäß 34 bzw. einer Würzepfanne 30 oder einem Glattwassertank 36 (siehe Fig. 4) zuführbar ist.

Unterhalb des Läuterbottichs ist mindestens ein Treberbunker 1 angeordnet. Der Treberbunker 1 kann beispielsweise über den Treberabfallkasten 32 mit dem Bottichboden 23 verbunden sein, wobei in dem Läuterbottichboden 23 Treberluken 33 vorgesehen sind, durch die der Treber ausgetrebert werden kann. Dazu ist in bekannter Weise ein nicht dargestelltes Austreberscheit vorgesehen, das heruntergeklappt wird und den Treber zur Treberluke hinschiebt. Es ist auch möglich, die Aufschneidemesser anzuheben und dabei die Messer 25 so quer zu stellen, dass der Treber ausgetragen wird.

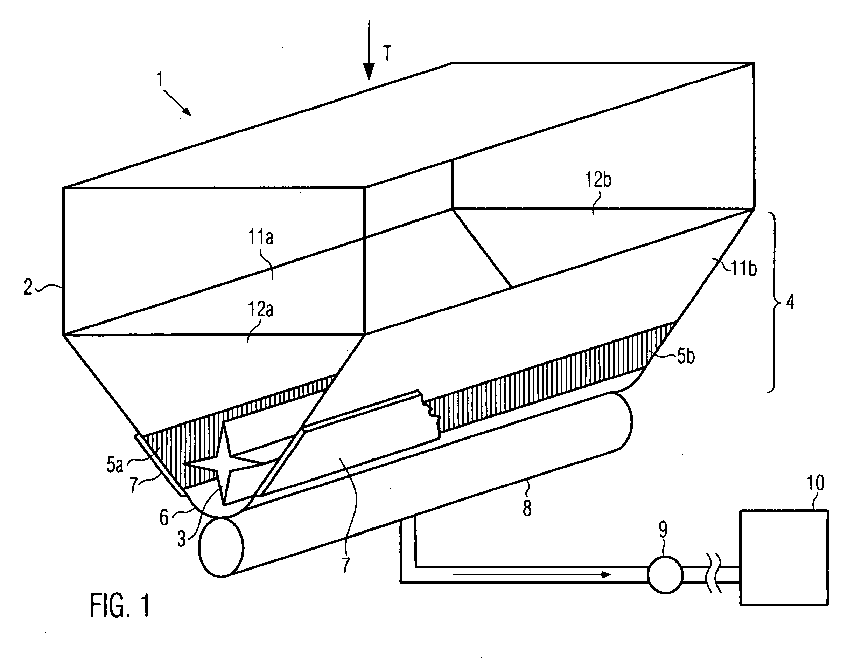

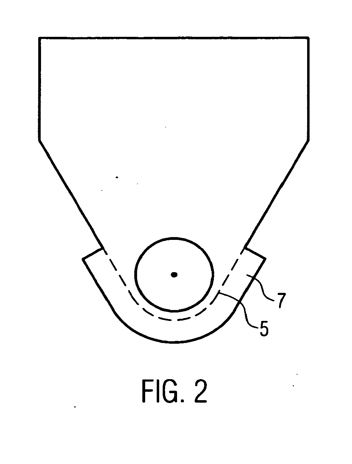

Wie aus den Figuren 1 und 3 hervorgeht ist der erfindungsgemäße Treberbunker 1 so ausgebildet, dass er von oben wie durch den Pfeil T in Fig. 1 dargestellt ist, Treber aus dem Läuterbottich 19 aufnehmen kann. Bei dieser Ausführungsform ist der untere Bereich 4 des Treberbunkers trichterförmig ausgebildet, d.h., dass hier die beiden Seitenwandungen 11a, b aufeinander zulaufen. In diesem konkreten Ausführungsbeispiel sind Vorder- und Rückwand 12 a, b parallel zueinander angeordnet. Im unteren Bereich des Gehäuses 4 sind bei diesem Ausführungsbeispiel die Seitenwandungen 11 a, b zumindest teilweise als Siebfläche 5 a, 5b ausgebildet. Die Siebfläche kann als Lochblech ausgebildet sein oder aus einer Fläche die ebenso gefertigt ist, wie der Senkboden eines Läuterbottichs, wie beispielsweise ein geschlitzter oder gefräster Senkboden oder Drahthordenboden. Die Siebweite dieser Siebfläche entspricht dabei den vorher beschriebenen Siebweiten und Durchgangsflächen des Senkbodens 20. Der Boden 6 des Treberbunkers ist hier als Mulde ausgebildet und weist vorzugsweise mehrere nicht dargestellte Öffnungen auf, damit nach unten sickernde Restflüssigkeit ablaufen kann oder abgezogen werden kann. Wie in Fig. 2 dargestellt ist, kann der Boden 6 ebenfalls zumindest teilweise als Siebfläche 5 ausgebildet sein. Auch die Stirn- und Seitenwandung kann als Siebfläche ausgebildet sein. Außen an den Siebflächen sind entsprechende Wannen 7 angeordnet, so dass abgezogenes Restwasser zwischen der Wannenwand und der Siebfläche abgeleitet werden kann. Dabei können beispielsweise, wie in Fig. 3 dargestellt ist, mehrere entlang der Seitenwand angeordnete Leitungen 28 vorgesehen sein, die Restflüssigkeit aus den Wannen in ein Ablaufrohr 8 leiten. In Fig. 1 ist für die beiden Siebflächen 5a, 5b jeweils eine eigene Wanne 7 vorgesehen. Es ist jedoch auch möglich eine gemeinsame Wanne 7 für entsprechende Filterflächen vorzusehen, wie in Fig. 2 dargestellt ist. In der Ablaufleitung 8 ist eine Pumpe 9 vorgesehen, so dass dem Treber über die Siebflächen 5 die Restflüssigkeit entzogen werden kann.

Im unteren Bereich des Gehäuses ist eine Fördereinrichtung 3 vorgesehen, die den Treber aus dem Treberbunker fördert. Die in Fig. 1 nur schematisch angedeutete Fördereinrichtung 3 kann beispielsweise eine Förderschnecke sein, die sich entlang der Länge des Treberbunkers erstreckt und die über einen nicht gezeigten Motor antreibbar ist. Vorteilhafterweise ist die Fördereinrichtung leistungs- bzw. drehzahlgeregelt und/oder in wechselnder Richtung antreibbar. Somit kann die Fördereinrichtung 3 einerseits dazu verwendet werden den Treber beim Entwässern aufzulockern, wobei dann die Drehzahl nur sehr gering ist und gegebenenfalls auch die Richtung der Drehung änderbar ist. Soll der Treber ausgetragen werden kann dies mit höherer Geschwindigkeit erfolgen. Aus dem Treberbunker 1 kann der entwässerte Treber in einen Trebersilo ausgetragen werden.

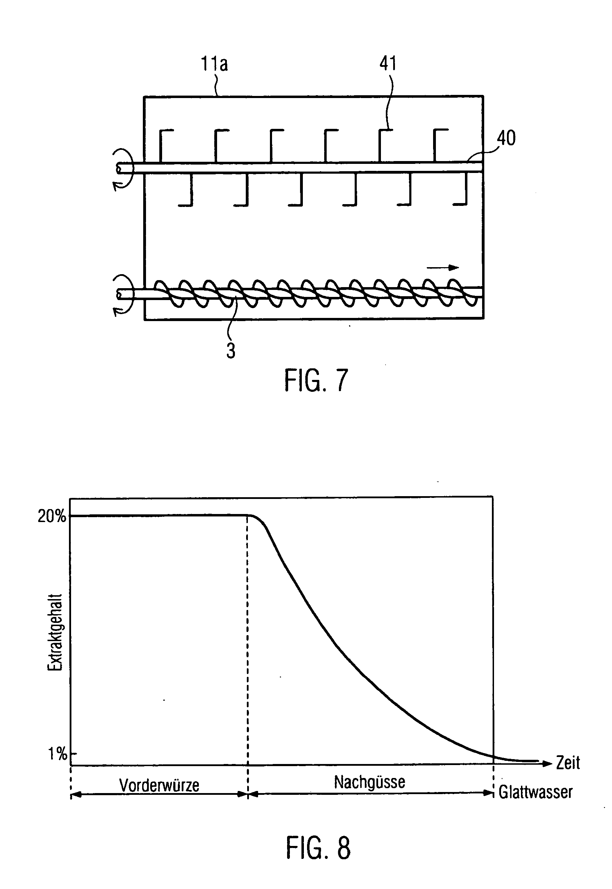

Gemäß einer bevorzugten Ausführungsform der vorliegenden Erfindung umfasst der Treberbunker neben der Fördereinrichtung 3 noch eine Auflockerungseinrichtung 40, wie in Figur 7 dargestellt ist. Die Auflockerungseinrichtung 40 ist über der Fördereinrichtung 3 angeordnet. Die Auflockerungseinrichtung 40 erstreckt sich ebenso wie die Fördereinrichtung 3 in Längsrichtung des Treberbunkers 1. Die Auflockerungseinrichtung 40 umfasst mehrere sich radial erstreckende Auflockerelemente, die Hakenabschnitte zur besseren Auflockerung umfassen können. Ebenso wie die Fördereinrichtung 3 ist die Auflockerungseinrichtung 40 drehzahlgeregelt und/oder in wechselnden Richtungen antreibbar. Die Auflockerungseinrichtung 40 wird dabei ebenso wie die Fördereinrichtung durch einen in Figur 7 nicht dargestellten Antrieb, wie durch die Pfeile gezeigt, gedreht. Der Durchmesser der Auflockerungseinrichtung 40, d. h. in Figur 7, die Höhe ist größer als der Durchmesser der Fördereinrichtung 3, damit eine ausreichende Auflockerung im Treberbunker 1 erzielt werden kann.

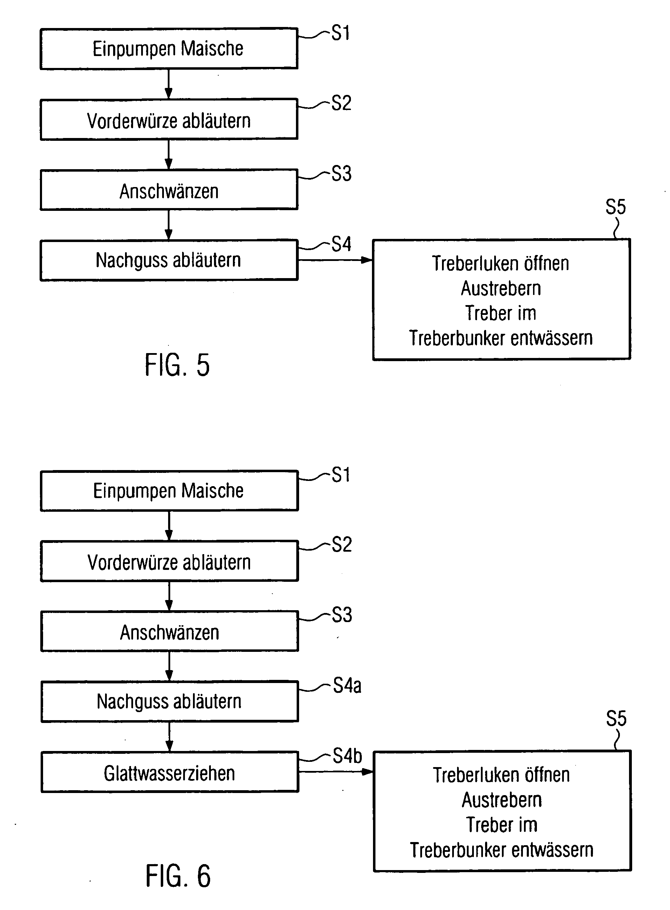

Figuren 5 und 6 zeigen mögliche Ausführungsformen des erfindungsgemäßen Verfahrens.

In bekannter Weise wird beim Läuterverfahren zunächst die Maische in den Läuterbottich, z.B. über den Maischezulauf 35 zugeführt.(S1)

Schließlich wird zunächst die Vorderwürze abgeläutert (Hauptguss) (S2). Die Vorderwürze wird einer Würzepfanne 30 (siehe Fig. 4) und/oder einem Vorlauftank 34 zugeführt.

Im Anschluss erfolgt der Nachguss, wobei Anschwänzwasser über die Düsen 26 in den Läuterbottich 19 eingebracht wird (S3)und ebenfalls abgeläutert wird (S4). Die ablaufenden dünneren Würzen heißen Nachgüsse. Beim Abläutern gibt es mindestens einen Nachguss. Es kann auch öfter angeschwänzt werden , so dass mehrere Nachgüsse abgeläutert werden.

Gemäß der vorliegenden Erfindung wird nun bereits beim Ablaufen des letzten Nachgusses der Treber ausgetrebert, indem die Treberluken 33 geöffnet werden und der Treber in den Treberbunker geschoben wird und ,dort wie in Zusammenhang mit Fig. 1 erläutert, entwässert wird.(S5)

Figur 8 zeigt eine Extraktkurve, aus der hervorgeht, dass die abgeläuterte Vorderwürze einen hohen Extraktgehalt aufweist, wobei die Nachgüsse einen niedrigeren Extraktgehalt aufweisen und bei einem bestimmten Extraktgehalt das Glattwasser gezogen wird, das dann nicht mehr dem Vorlaufgefäß oder der Würzepfanne zugeführt wird. Die entsprechenden Extraktgehalte hängen jedoch von der zu brauenden Biersorte ab, so dass Fig. 8 nur ein Beispiel für eine mögliche Extraktkurve ist. Durch die vorzeitige Austreberung vor Ende des letzten Nachgusses steht der Läuterbottich früher für den nächsten Sud bereit. Dadurch, dass das Abläutern des Nachgusses im Läuterbottich vorzeitig gestoppt wird und der Treber dem Treberbunker 1 zugeführt wird, kann der Treberbunker 1 einen Teil der Funktion des Läuterbottichs 19 übernehmen.

Gemäß der vorliegenden Erfindung wird der Treber also in einem noch deutlich feuchteren Zustand als bisher in den Treberbunker ausgetragen. Ohne die Abläuterzeit zu erhöhen, kann dann im Treberbunker der Treber sehr stark entwässert werden und sehr trocken dem Trebersilo zugeführt werden.

Während der Nachguss abläuft bedeutet hier, dass die abgezogene Würze je nach Biersorte noch einen Extraktbereich größer 1 - 8 % vorzugsweise 2 - 6 % aufweist.

Fig. 6 zeigt eine weitere Ausführungsform der vorliegenden Erfindung. Auch hier wird wie zuvor beschrieben zunächst die Maische eingepumpt (S1), in bekannter Weise die Vorderwürze abgeläutert (S2), mindestens einmal angeschwänzt (S3) und mindestens ein Nachguss abgeläutert(S4a) wird, wobei dann, wenn der letzte Teil des Nachgusses, der abgeläutert wurde, einen sehr niedrigen Extraktgehalt von etwa bis zu 1 %, oder je nach Biersorte auch höher, aufweist das Glattwasser gezogen wird (S4b), das dann nicht mehr in den Vorlauftank oder die Würzepfanne gepumpt wird, sondern in den Glattwassertank, um für den nachfolgenden Sud, beispielsweise als Einmaischwasser verwendet zu werden oder zum Anschwänzwasser gegeben wird.

Bei dieser Ausführungsform wird während das Glattwasser abgeläutert wird, die Treberluke 33 geöffnet und der feuchte Treber in den Treberbunker 1 geschoben. Im Treberbunker 1 wird dann der Treber weiter entwässert.

Wie insbesondere im Zusammenhang mit Figur 8 deutlich wird, kann so, gemäß der zweiten Ausführungsform der Vorgang des Glattwasserziehens im Läuterbottich 19 vorzeitig beendet werden, wobei das Glattwasser dann im Treberbunker 1 weiter gezogen wird. Durch das vorzeitige Austrebern vor Ende des Glattwasserziehens steht der Läuterbottich früher für den nächsten Sud bereit.

Der Treberbunker übernimmt also gemäß der vorliegenden Erfindung einen Teil des Nachgussabläuterns und/oder einen Teil des Glattasserziehens.

Im Treberbunker wird dann, wie zuvor beschrieben, der feuchte Treber weiter entwässert.

Fig. 4 zeigt grob schematisch den Maischebehälter 29 von dem aus die Maische in den Läuterbottich 19 geleitet wird (siehe Pfeil P1). Die abgeläuterte Vorderwürze sowie die abgeläuterten Nachgüssen werden aus dem Läuterbottich 19 entweder direkt in die Würzepfanne 30 weitergeleitet (siehe Pfeile P3, P4, P9) oder aber zunächst in das Vorlaufgefäß 34 geführt, von wo aus die Würze der Würzepfanne 30 zugeführt werden kann (P8, P9). Wie zuvor beschrieben kann die Restflüssigkeit, die dem Treber im Treberbunker 1 entzogen wird, bei dem in Fig. 5 gezeigten Verfahren auch der Würzepfanne 30 (P2,P7) zugeführt werden oder über das Vorlaufgefäß 34 der Würzepfanne 30 zugeführt werden (P2, P6, P8, P9). Wenn der Extraktgehalt der Restflüssigkeit, die dem Treber im Treberbunker entzogen wird, unterhalb einer von der Biersorte abhängigen Grenze(z.B. von 0,8 bis 1 % oder ~ ≥ 1%) liegt, wird diese Restflüssigkeit dann nicht mehr der Würzepfanne zugeführt, sondern z.B. einem Glattwassertank 36 (P10).

Bei dem im Zusammenhang mit Fig. 6 beschriebenen Verfahren, wird das Glattwasser ebenfalls aus dem Treberbunker 1 z.B. dem Glattwassertank 36 (siehe Pfeile P2, P10) zugeführt. Fig. 4 ist nur eine grob schematische Darstellung die nicht die entsprechend notwendigen Ventile und Pumpen zeigt.

Mit Hilfe der vorliegenden Erfindung kann man den letzten Nachguss oder das Glattwasser, die man bisher vollständig im Läuterbottich gezogen hat, nun jedenfalls teilweise im Treberbunker 1 ziehen, so dass sich insgesamt die Abläuterzeit verkürzt mit dem Ergebnis, dass man höhere Sudfolgen erreichen kann. Darüber hinaus kann, ohne dass sich die Läuterzeit im Läuterbottich erhöht, der Treber stärker getrocknet werden.

## Patentansprüche

1. Treberbunker (1) zur Aufnahme von Treber aus einem Läuterbottich (19),
mit einem Gehäuse (2) und einer Fördereinrichtung (3), die in einem unteren Bereich (4) des Gehäuses (2) angeordnet ist und die Treber aus dem Treberbunker (1) fördert,
**dadurch gekennzeichnet, dass**
im unteren Bereich (4) des Gehäuses (2) zumindest ein Teil des Gehäuses als Siebfläche (5, 5a, 5b) ausgebildet ist.

2. Treberbunker (1) nach Anspruch 1,
**dadurch gekennzeichnet, dass**
das Gehäuse (2) zumindest im unteren Bereich (4) im Wesentlichen trichterförmig ausgebildet ist.

3. Treberbunker (1) nach mindestens einem der Ansprüche 1 oder 2,
**dadurch gekennzeichnet, dass**
zumindest ein Teil der Seitenwandungen (11a, 11b) des Gehäuses (2) und/oder zumindest ein Teil der Stirn- und Rückwandung (12a, 12b) als Siebfläche (5, 5a, 5b) ausgebildet ist.

4. Treberbunker (1) nach mindestens einem der Ansprüche 1 bis 3,
**dadurch gekennzeichnet, dass**
das Gehäuse (2) einen Boden (6) aufweist, der mehrere Öffnungen aufweist oder zumindest teilweise als Siebfläche ausgebildet ist.

5. Treberbunker (1) nach mindestens einem der Ansprüche 1 bis 4,
**dadurch gekennzeichnet, dass**
außen an der Siebfläche (5) eine Wanne (7) angeordnet ist, über die Restflüssigkeit aus dem Treber abziehbar ist.

6. Treberbunker (1) nach mindestens einem der Ansprüche 1 bis 5,
**dadurch gekennzeichnet, dass**
in dem Gehäuse (2) mehrere Siebflächen (5) angeordnet sind, die entsprechende Wannen (7) oder eine gemeinsame Wanne (7) aufweisen.

7. Treberbunker (1) nach mindestens einem der Ansprüche 1 bis 6,
**dadurch gekennzeichnet, dass**
die Fördereinrichtung vorzugsweise drehzahlgeregelt ist und/oder in wechselnden Richtungen antreibbar ist.

8. Treberbunker nach mindestens einem der Ansprüche 1 bis 7,
**dadurch gekennzeichnet, dass**
über der Fördereinrichtung (3) eine Auflockerungseinrichtung (40) angeordnet ist.

9. Läuterverfahren zum Erzeugen von Würze mit Hilfe eines Läuterbottichs, wobei Maische in den Läuterbottich eingebracht, die Vorderwürze und dann mindestens ein Nachguss abgeläutert wird,
**dadurch gekennzeichnet, dass**
beim Ablaufen des letzten Nachgusses oder beim Glattwasserziehen der Treber aus dem Läuterbottich in einen Treberbunker ausgetrebert wird, und im Treberbunker dem Treber über eine Siebfläche Restflüssigkeit entzogen wird.

10. Läuterverfahren nach Anspruch 9,
**dadurch gekennzeichnet, dass**
die im Treberbunker (1) entzogene Restflüssigkeit einem Tank (10), insbesondere einem Glattwassertank, einem Vorlaufgefäß oder einer Würzepfanne zugeführt wird.

11. Verfahren nach Anspruch 9 oder 10,
**dadurch gekennzeichnet, dass**
die im Treberbunker (1) entzogene Restflüssigkeit für den nächsten Sud verwendet wird.

12. Verfahren nach einem der Ansprüche 9 bis 11,
**dadurch gekennzeichnet, dass**
der verdichtete Treber, nachdem ihm die Restflüssigkeit entzogen wurde, aus dem Treberbunker über eine Fördereinrichtung ausgeleitet wird.

13. Verfahren nach mindestens einem der Ansprüche 9 bis 12,
**dadurch gekennzeichnet, dass**
der Treber während ihm Restflüssigkeit entzogen wird, mechanisch aufgelockert wird.

14. Läuterbottich zum Abläutern von Würze, der mindestens einen Treberbunker nach mindestens einem der Ansprüche 1-8 umfasst.

## Claims

1. Spent grain bunker (1) for receiving spent grain from a lauter tun (19), comprising a housing (2) and a conveyor (3) which is arranged in a lower region (4) of the housing (2) and which conveys the spent grain from the spent grain bunker (1),
**characterised in that**
in the lower region (4) of the housing (2), at least one part of the housing is designed as a screening surface (5, 5a, 5b).

2. Spent grain bunker (1) according to Claim 1,
**characterised in that**
the housing (2) is substantially formed in the shape of a funnel at least in the lower region (4).

3. Spent grain bunker (1) according to at least one of Claims 1 or 2,
**characterised in that**
at least one part of the side walls (11a, 11b) of the housing (2) and/or at least one part of the front and rear wall (12a, 12b) is formed as a screening surface (5, 5a, 5b).

4. Spent grain bunker (1) according to at least one of Claims 1 to 3,
**characterised in that**
the housing (2) has a base (6) that has a plurality of openings or is at least partially formed as a screening surface.

5. Spent grain bunker (1) according to at least one of Claims 1 to 4,
**characterised in that**
a pan (7) is arranged on the exterior on the screening surface (5) via which residual liquid can be removed from the spent grain bunker.

6. Spent grain bunker (1) according to at least one of Claims 1 to 5,
**characterised in that**
a plurality of screening surfaces (5) are arranged in the housing (2), which have corresponding pans (7) or a common pan (7).

7. Spent grain bunker (1) according to at least one of Claims 1 to 6,
**characterised in that**
the conveyor is preferably speed controlled and/or can be driven in alternate directions.

8. Spent grain bunker according to at least one of Claims 1 to 7,
**characterised in that**
a loosening device (40) is arranged above the conveyor (3).

9. Lautering process for producing wort by means of a lauter tun, wherein mash is introduced into the lauter tun, the initial wort and then at least one amount of sparge water is lautered,
**characterised in that**
the spent grain is drawn from the lauter tun into the spent grain bunker when the final amount of sparge water drains off or when the last wort draws off, and in the spent grain bunker, residual liquid is removed from the spent grain via a screening surface.

10. Lautering process according to Claim 9,
**characterised in that**
the residual liquid removed in the spent grain bunker (1) is supplied to a tank (10), in particular a last wort tank, an upstream vessel or a wort copper.

11. Method according to Claim 9 or 10,
**characterised in that**
the residual liquid removed in the spent grain bunker (1) is used for the next brew.

12. Method according to any one of Claims 9 to 11,
**characterised in that**
the compacted spent grain, after residual liquid has been removed therefrom, is discharged from the spent grain bunker via a conveyor.

13. Method according to at least one of Claims 9 to 12,
**characterised in that**
the spent grain is loosened mechanically whilst the residual liquid is being removed therefrom.

14. Lauter tun for lautering wort, comprising at least one spent grain bunker according to any one of Claims 1-8.

## Revendications

1. Réservoir de drèche (1) pour recueillir la drèche à partir d'une cuve de filtration (19), avec un carter (2) et un convoyeur (3) qui est disposé dans une zone inférieure (4) du carter (2) et qui sort les drèches du réservoir (1),
**caractérisé en ce que** dans la zone inférieure (4) du carter (2), une partie au moins du carter est conçue comme une surface filtrante (5, 5a, 5b).

2. Réservoir de drèche (1) selon la revendication 1, **caractérisé en ce que** le carter (2), au moins dans la zone inférieure (4), a globalement la forme d'une trémie.

3. Réservoir de drèche (1) selon l'une au moins des revendications 1 ou 2, **caractérisé en ce qu'**une partie au moins des parois latérales (11a, 11b) du carter (2) et/ou une partie au moins de la paroi frontale et arrière (12a, 12b) sont conçues comme une surface filtrante (5, 5a, 5b).

4. Réservoir de drèche (1) selon l'une au moins des revendications 1 à 3, **caractérisé en ce que** le carter (2) présente un fond (6) qui présente plusieurs ouvertures ou qui est conçu au moins en partie comme une surface filtrante.

5. Réservoir de drèche (1) selon l'une au moins des revendications 1 à 4, **caractérisé en ce qu'**il est prévu sur l'extérieur de la surface filtrante (5) une cuve (7) par laquelle le liquide résiduel peut être extrait de la drèche.

6. Réservoir de drèche (1) selon l'une au moins des revendications 1 à 5, **caractérisé en ce qu'**il est prévu dans le carter (2) plusieurs surfaces filtrantes (5) qui présentent des cuves (7) correspondantes ou une cuve (7) commune.

7. Réservoir de drèche (1) selon l'une des revendications 1 à 6, **caractérisé en ce que** le convoyeur est de préférence à réglage de vitesse et/ou est apte à être entraîné dans des sens alternés.

8. Réservoir de drèche (1) selon l'une des revendications 1 à 7, **caractérisé en ce qu'**un dispositif d'ameublissement (40) est disposé au-dessus du convoyeur (3).

9. Procédé de filtration pour produire du moût à l'aide d'une cuve de filtration, étant précisé que de la maische est introduite dans la cuve de filtration, le premier moût puis au moins un moût second sont filtrés,
**caractérisé en ce que** lors de l'écoulement du dernier moût second ou lors de l'extraction de la dernière eau de lavage, la drèche est extraite de la cuve de filtration et amenée dans un réservoir de drèche, et dans le réservoir de drèche le liquide résiduel est extrait de la drèche par l'intermédiaire d'une surface filtrante.

10. Procédé de filtration selon la revendication 9, **caractérisé en ce que** le liquide résiduel extrait dans le réservoir de drèche (1) est amené dans une cuve (10), en particulier une cuve d'eau de dernier lavage, un récipient d'avant-coulant ou une chaudière à moût.

11. Procédé selon la revendication 9 ou 10, **caractérisé en ce que** le liquide résiduel extrait dans le réservoir de drèche (1) est utilisé pour le brassin suivant.

12. Procédé selon l'une des revendications 9 à 11, **caractérisé en ce que** la drèche compactée est évacuée, après que le liquide résiduel en a été extrait, du réservoir de drèche par l'intermédiaire d'un convoyeur.

13. Procédé selon l'une au moins des revendications 9 à 12, **caractérisé en ce que** la drèche, pendant que le liquide résiduel en est extrait, est aérée mécaniquement.

14. Cuve de filtration pour filtrer le moût, qui comprend au moins un réservoir de drèche selon l'une au moins des revendications 1 à 8.
